Europäisches Patentamt

European Patent Office

Office européen des brevets

(11) Veröffentlichungsnummer: **0 135 653**
**A2**

# (12) EUROPÄISCHE PATENTANMELDUNG

(21) Anmeldenummer: **84103775.7**

(22) Anmeldetag: **05.04.84**

(51) Int. Cl.⁴: $G\ 01\ L\ 9/06$, $G\ 01\ L\ 19/04$, $G\ 01\ L\ 19/14$

(30) Priorität: **13.04.83 DE 3313261**

(43) Veröffentlichungstag der Anmeldung: **03.04.85**
**Patentblatt 85/14**

(84) Benannte Vertragsstaaten: **CH FR GB IT LI SE**

(71) Anmelder: **ERMETO Armaturen GmbH, Am Metallwerk 9, D-4800 Bielefeld 12 (DE)**

(72) Erfinder: **Köhnlechner, Rainer, Dr., Buschweg 24, D-4814 Schloss-Holte (DE)**

(74) Vertreter: **Linser, Heinz et al, Patentanwälte Heinz Linser Dipl. Ing. Eckhardt Eyer Robert-Bosch-Strasse 12a Postfach 10 22 10, D-6072 Dreieich (DE)**

(54) **Druck- und/oder Temperatursensor.**

(57) Die Erfindung betrifft eine Vorrichtung zur Messung von hohen Drücken und Temperaturen in einem hydraulischen oder pneumatischen System, vorzugsweise mit Hilfe einer piezoresistiven Druckmeßzelle und einer elektronischen Schaltung, welche in einem Gehäuse zu einer Baueinheit integriert ist, wobei diese ein Schraubgehäuse aufweist, welches in einen den Drucksensor enthaltenden Druckraum und einen durch Bohrungen für elektrische Kontakte oder Anschlußpfosten verbundenen, die zugehörige elektronische Schaltung enthaltenden drucklosen Raum aufgeteilt ist, und der Druckraum mit einem inkrompressiblen Druckübertragungsmedium gefüllt und mittels einer Druckübertragungsmembrane zur Druckseite des Systems abgeschlossen ist, wobei in dem Druckraum eine über den Druck desselben wirkende Sensor-Justiervorrichtung angeordnet ist.

Das den Druckraum des Schraubgehäuses begrenzende und die Druckübertragungsmembrane aufnehmende Ringsystem weist eine Radialbohrung auf, welche durch ein den Druck des Druckraumes justierbaren Element verschlossen ist.

Dieses Element ist beispielsweise als Kugel ausgebildet, welche zur Druckjustierung des Drucksensors mit einem definierten Druck in die Radialbohrung einsetzbar ausgebildet ist.

ACTORUM AG

0135653

Beschreibung:

Die Erfindung betrifft eine Vorrichtung zur Messung von Drücken, insbesondere hohen Drücken, und Temperaturen in einem hydraulischen oder pneumatischen System, vorzugsweise mit Hilfe einer piezoresistiven Druckmeßzelle und einer elektronischen Schaltung, welche in einem Gehäuse zu einer Baueinheit integriert ist.

Die im Laufe der schnellen technischen Entwicklung komplexer werdenden hydraulischen Systeme stellen zunehmend höhere Anforderungen an die erforderliche Genauigkeit und Schaltgeschwindigkeit der angeschlossenen Systeme. Hieraus ergibt sich die Forderung nach Druck- und Temperaturmeßverfahren, welche nicht nur die aktuellen Meßwerte in die elektronische Schaltung kontinuierlich melden, sondern auftretende Störungen der Anlage frühzeitig, d. h. unmittelbar beim Entstehen anzeigen. Im Gegensatz zu herkömmlichen Manometern, die meist nur in Intervallen abgelesen werden und vielfach dem Schwierigkeitsgrad bestimmter Messungen nicht gerecht werden, bieten elektronische Meßeinrichtungen kontinuierliche Meßwertaufnahme und schnelle Verarbeitung der Signale bei hoher Meßgenauigkeit.

Bei den bisher bekannten Druck-Meßzellen der eingangs aufgeführten Art wird das zur Druckaufnahme verwendete piezoresistive Halbleiterelement (Silicium-Chip) mit Hilfe von Bond-Drähten an entsprechende Kontakte angeschlossen. Das gesamte Sensorgehäuse besteht dabei aus einem von der Halbleitertechnik her genormten Gehäuse, ähnlich wie diese für Transistoren, Operationsverstärker oder dergleichen verwendet werden.

Die genormten Gehäuse sind wegen ihrer Bauweise nicht für den Einsatz zur Messung von hohen und höchsten Drücken geeignet, da die Druckbeeinflussung der Gehäuse eine Meßverfälschung zur Folge hat. Ferner halten die Gehäuse höchsten zu messenden Drücken nicht stand, sondern sind Deformationen unterworfen.

Aus der Dt-PS 26 30 640 ist bereits eine Vorrichtung der oben genannten Art bekannt, welche in einem ölgefüllten Übertragungsmembrangehäuse untergebracht ist, wobei die Sockelstifte in über den Umfang verteilte Preßglasführungen des Übertragungsmembrangehäuses eingebettet sind. Die Druckmeßzelleneinheit ist auf ein Basisscheibchen gekittet, welches einen demgegenüber größeren Duchmesser aufweist. Zur Durchführung der Sockelstifte sind über den Umfang versehene Durchtritte vorgesehen, welche mit denjenigen des Übertragungsmembrangehäuses korrespondieren. Die Sockelstifte führen die elektrischen Kontakte des Sensors aus der Druckmeßzelle heraus zu einer außerhalb des Systems liegenden Elektronik, welche zur Versorgung des Sensorsystems und zur Verstärkung der erzeugten Signale dient. Hierdurch läßt sich kein kompaktes Meßsystem aufbauen, welches durch einfache Schraub- und Meßadapter an ein unter Druck stehendes hydraulisches oder pneumatisches System anschließbar ist.

Insbesondere zur Messung von hohen Drücken und Drücken unter extremen Bedingungen, wie etwa bei hohen Temperaturen, ist es erforderlich Justiervorrichtungen vorzusehen, um in allen Bereichen exakte Messungen vornehmen zu können. Um jedoch eine Justierung des Drucksensors vonehmen zu können und diese auch kontinuierlich während der Messungen aufrechtzuerhalten, ist es erforderlich die physikalischen Größen zu messen und auszuwerten, welche in unmittelbarer Umgebung des Drucksensors herrschen und welche die Meßgenauigkeit des Drucksensors beeinflussen.

Die piezoresistive Meßzelle, welche aus einem Si-Chip aufgebaut ist, zeigt die Eigenschaft, daß sie bereits bei Drücken von Null Bar eine positive oder negative Spannung abgibt. Um eine solche Meßzelle auch zur genauen Druckmessung verwenden zu können, ist es daher erforderlich eine Justiermöglichkeit vorzusehen. Hierbei ist es besonders wichtig, daß die Meßzelle bei einem tatsächlich vorherrschenden Druck von Null Bar auch einen solchen exakt anzeigt, daß heißt keine Spannung abgibt.

0135653

EO 6020

Die von der Meßzelle , d.h. von dem Si-Chip abgegebenen Spannungen sind äußerst gering und müssen daher verstärkt werden, um auswertbare Ergebnisse zu erzielen. Bei den bekannten Zellen ist die Elektronik vom Si-Chip relativ weit entfernt und die elektrischen Verbindungen sind beispielsweise über Steck- oder Schraubkontakte geführt. Auf diesem Wege sind die Signale, und hier insbesondere die schwachen Signale Störungen ausgesetzt, welche für eine genaue Messung vermieden werden müssen.

Der Erfindung liegt daher die Erkenntnis zugrunde, daß es zur Vermeidung aller Störungen erforderlich ist, die physikalischen Werte, welche den Drucksensor negativ beeinflussen, dort zu messen und möglichst auch auszuwerten, wo sie die Beeinflussung des Sensors ausüben, damit auch diese Werte keiner Störung ausgesetzt sind.

Der Erfindung liegt daher die Aufgabe zugrunde eine Vorrichtung der eingangs aufgeführten Art vorzuschlagen, welche die exakte Messung hoher und höchster Drücke erlaubt, welche dennoch robust ausgebildet ist und in einfacher Weise an hydraulische oder pneumatiche Systeme anschließbar ist. Weiter liegt der Erfindung die Aufgabe zugrunde eine Meßvorrichtung vorzuschlagen, welche bei einem Systemdruck von Null Bar einen äußerst genauen Wert anzeigt.

Die Lösung dieser Aufgabe erfolgt gemäß der Erfindung dadurch, daß diese ein Schraubgehäuse aufweist, welches in einen den Drucksensor enthaltenden Druckraum und einen durch Bohrungen für elektrische Kontakte oder Anschlußpfosten verbundenen, die zugehörige elektronische Schaltung enthaltenden drucklosen Raum aufgeteilt ist, daß der Druckraum mit einem inkrompressiblen Druckübertragungsmedium gefüllt und mittels einer Druckübertragungsmembrane zur Druckseite des Systems abgeschlossen ist, und daß in dem Druckraum eine über den Druck desselben wirkende Sensor-Justiervorrichtung angeordnet ist.

In einer Ausführungsform der Erfindung weist ein den Druckraum des Schraubgehäuses begrenzendes und die Druckübertragungsmembrane aufnehmendes Ringsystem oder das eigentliche Sensorgehäuse eine Radial- oder Winkelbohrung auf, welche durch ein den Druck des Druckraumes justierbares Element verschlossen ist.

In Weiterbildung der Erfindung ist das Element als Kugel ausgestaltet, welche zur Druckjustierung des Drucksensors mit einem definierten Druck in die Radialbohrung einsetzbar ausgebildet ist. Die Radialbohrung ist vorzugsweise als Schraubbohrung und das justierbare Element als Schraubelement ausgebildet, so daß eine Nachregulierung und Einstellung jederzeit möglich ist.

In einer weiteren Ausgestaltung der Erfindung ist die Sensor-Justiervorrichtung als ein mechanischer, einen elektrischen Kreis schließbaren Druckschalter ausgebildet, welcher einen definiert geringen Ansprechwert aufweist, wobei der durch den Druckschalter schließbare elektrische Kreis im elektrischen Kreis des Sensors liegt.

Der mechanische Druckschalter ist in vorteilhafter Weise ebenfalls justierbar ausgebildet.

In einer noch anderen Ausführungsform der Erfindung ist die Sensor-Justiervorrichtung zur Null-Punkt-Einstellung des Drucksensors aus elektrischen Kombinationswiderständen aufgebaut.

Die die elektrischen Kontakte aufnehmenden Bohrungen sind konisch ausgebildet, wobei der Bohrungsdurchmesser zum drucklosen Raum hin abnimmt. Auf diese Weise ist das Meßsystem gegen einen großen Differenzdruck abgesichert.

Die Erfindung wird anhand der Zeichnungen näher erläutert. Hierbei zeigen:

0135653

EO 6020

FIGUR 1 einen Querschnitt durch das Schraubgehäuse;

FIGUR 2 einen teilweisen Längsschnitt nach Figur 1;

FIGUR 3 einen Querschnitt durch das Schraubgehäuse einer weiteren Ausführungsform, ähnlich der Figur 1;

FIGUR 4 einen teilweisen Längsschnit, ähnlich der Figur 2,

FIGUREN 5, 6 und 7 Teilschnitte weiterer Ausführungsformen der Druckjustiervorrichtungen.

Die Vorrichtung zur Messung von hohen Drücken und Temperaturen besteht aus einem Schraubgehäuse 1, welches in einen den Drucksensor 2 und den Temperatursensor 16 enthaltenden, vom Drucksystem durch eine druckübertragende Membrane 3 getrennten Druckraum 4 und einen durch elektrische Kontakte oder Anschlußpfosten 5 verbundenen, die zugehörige elektronische Schaltung 14 enthaltenden drucklosen Raum 6 aufgeteilt ist. Die zur Durchführung der elektrischen Kontakte vorhandenen, zur Längsachse des Schraubgehäuses 1 etwa parallel verlaufenden Bohrungen 7 sind auf einer geraden Linie liegend angeordnet. Diese Kontaktanordnung weicht von der Gerätesteckernormung vollständig ab und ermöglicht den Einbau der elektronischen Schaltung 14, welche als Verstärker-Hybrid ausgebildet ist und zur Verstärkung der schwachen Ausgangssignale des Drucksensors 2 dient.

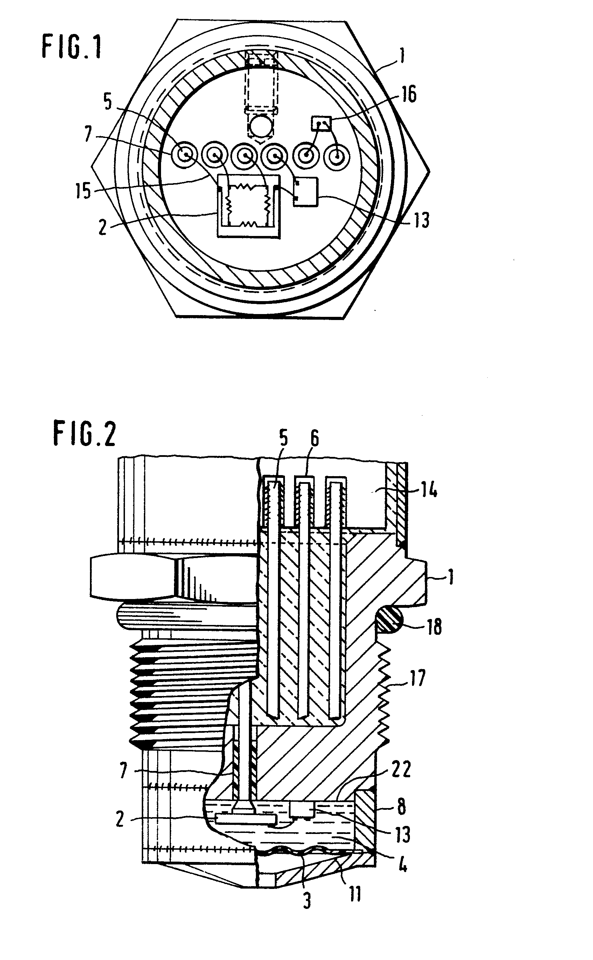

In der aus Figur 2 ersichtlichen Ausführungsform ist die Membrane 3 zwischen einem Ring 8 und einer Abdeckplatte 11 eingeschweißt.

Die im Gehäuse befindlichen Bohrungen 7, welche die elektrischen Kontakte oder Anschlußpfosten 5 aufnehmen, sind zur Druckabstützung bei höchsten Drücken konisch ausgebildet, wobei der Bohrungsdurchmesser zum drucklosen Raum 6 hin abnimmt. Zur druckdichten Isolierung sind die elektrischen Kontakte zur Bohrungswandung mit Hilfe einer Glasfüllung isoliert. Die Konizität beträgt bei dem hier dargestellten Ausführungsbeispiel 1:50.

Der Drucksensor 2 ist im Druckraum 4 auf einem Anschlußpfosten 5 angeordnet und befestigt, welcher an seinem oberen Ende mit einem "Nagelkopf" versehen ist. Durch diese Maßnahme wird erreicht, daß der Drucksensor möglichst störungsfrei die Druckwellen empfangen kann, die ihm über das im Druckraum 4 befindliche Trennfluid übertragen werden.

Wie aus der Figur 2 ersichtlich ist, ist die Membrane 3 zwischen dem Ring 8 und einer die mechanische Beschädigungen der Membrane 3 verhindernden konisch zulaufenden Abdeckplatte 11 eingeschweißt, welche ihrerseits Bestandteil des Schraubgehäuses 1 ist.

Wie oben bereits ausgeführt wurde, ist der durch den Ring 8, die Membrane 3 und das eigentliche Gehäuse 1 gebildete Zwischenraum, nämlich der Druckraum 4, mit einem chemisch inerten, elektrisch isolierenden Trennfluid gefüllt, welches eine 1:1 Druckübersetzung ermöglicht.

In dem Druckraum 4 ist neben dem Drucksensor 2 und dem Temperatursensor 16 der Druckschalter 13 angeordnet. In dem hier dargestellten Ausführungsbeispiel sind der Druckschalter 13 und der Temperatursensor 16 mit dem Boden des Gehäuses 1 im Druckraum 4 verbunden. Die elektrischen Kontakte des Drucksensors 2, des Druckschalters 13 und des Temperatursensors 16 sind jeweils durch die elektrischen Verbindungsleitungen 15 über die Anschlußpfosten 5 mit der im drucklosen Raum vorhandenen elektronischen Schaltung 14 verbunden.

Das Gehäuse 1 ist mit einem Einschraubgewinde 17 und einem darüber befindlichen Dichtungsring 18 versehen, so daß es in einen Adapter eingeschraubt werden kann.

Mit dem analogen Druck- und Temperatursensor nach der Erfindung werden in Verbindung mit entsprechenden Einbaumeßgeräten kontinuierlich und gleichzeitig Drücke und Temperaturen gemessen. Dabei wird die physikalische Kenngröße "Druck" mittels des piezoresistiven Drucksensors und Halbleiter-Chips 2 gemessen und in eine proportionale Kenngröße transformiert und mit einem integrierten Verstärker auf einen besonders störsicheren Signalpegel verstärkt.

Die Meßbereiche erstrecken sich bis zu Nenndrücken von 400 bar bei 100% Überlastsicherheit. Es sind Spitzendrücke bis zu 600 bar erfaßbar und der Temperaturbereich erstreckt sich von – 20°C bis + 120°C.

Durch die integrierte Anordnung des Sensorverstärkers in dem Gehäuse der Vorrichtung ergeben sich kurze elektrische Verbindungen von den Sensoren zum Verstärker, so daß noch äußerst schwache Signale empfangen und verstärkt werden können. Die Vorrichtung nach der Erfindung ist daher in der Lage bereits kleinste Druck- und Temperaturänderungen kontinuierlich und störungssicher zu erfassen und auszuwerten.

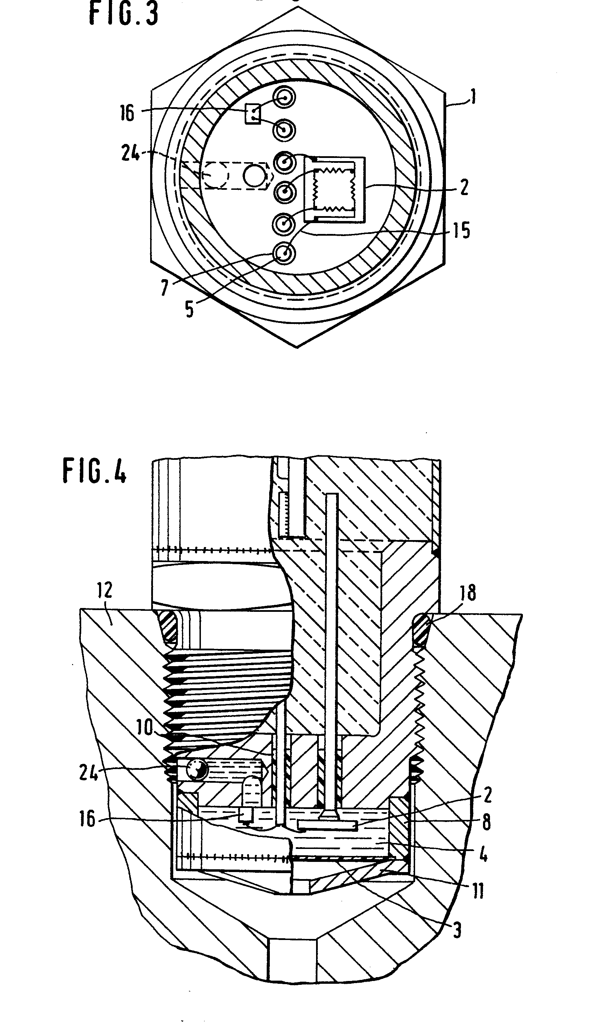

Die Figuren 3 und 4 zeigen einen Quer- bzw. Längsschnitt einer weiteren Ausführungsform der Erfindung. Die Druckjustiervorrichtung 24 ist dabei in einer Winkelbohrung angeordnet. Die Temperatur- und Drucksensoren 16 bzw. 11 befinden sich in dem mit einem Trennfluid gefüllten Druckraum.

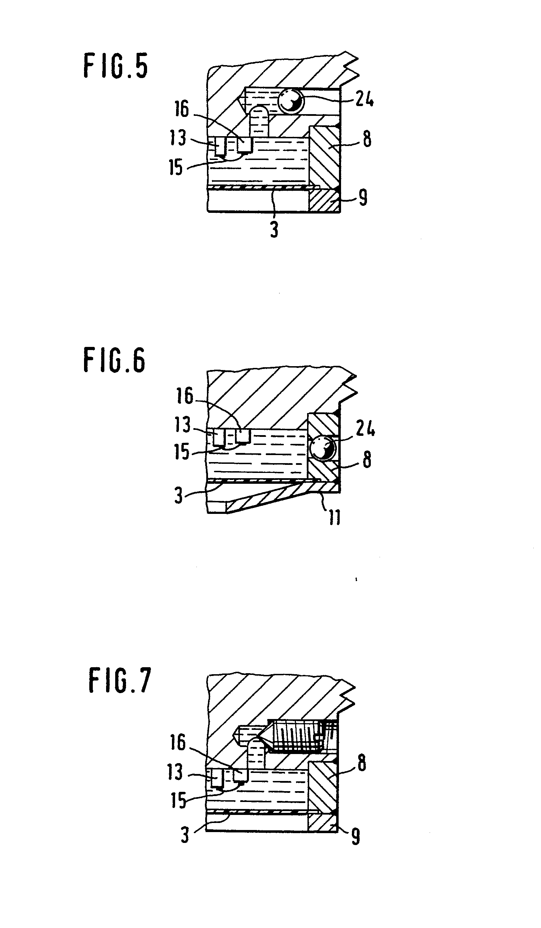

Die Figur 5 zeigt einen Teilschnitt einer Druckjustiervorrichtung, bestehend aus einer Winkelbohrung mit einer Kugel 24. Die Membrane 3 ist zwischen den Ringen 8 und 9, welche Bestandteil des Gehäuses 1 sind, verschweißt. In dem Druckraum 4 sind der Drucksensor 2 und der Temperatursensor 16 angeordnet.

Die Figur 6 zeigt eine Abwandlung der Ausführungsform nach Figur 5. Hierbei ist die Druckjustiervorrichtung als Radialbohrung, in der sich die Kugel 24 befindet, ausgebildet. Die Bohrung ihrerseits ist in dem Ring 8, der Bestandteil des Gehäuses 1 ist, vorhanden. Die Membrane 3 ist zwischen dem Ring 8 und einer Abdeckplatte 11 verschweißt.

Die Figur 7 gibt ein weiteres Ausführungsbeispiel der Druckjustiervorrichtung wieder, welche ebenfalls in einer Winkelbohrung angeordnet ist.

.−.−.−.−.−.−.−

0135653

EO 6020

Patentansprüche

1. Vorrichtung zur Messung von Drücken, insbesondere hohen Drücken, und Temperaturen in einem hydraulischen oder pneumatischen System, vorzugsweise mit Hilfe einer piezoresistiven Druckmeßzelle und einer elektronischen Schaltung, welche in einem Gehäuse zu einer Baueinheit integriert ist, dadurch gekennzeichnet, daß diese ein Schraubgehäuse (1) aufweist, welches in einen den Drucksensor (2) enthaltenden Druckraum (4) und einen durch Bohrungen (7) für elektrische Kontakte oder Anschlußpfosten (5) verbundenen, die zugehörige elektronische Schaltung (14) enthaltenden drucklosen Raum (6) aufgeteilt ist, daß der Druckraum (4) mit einem inkrompressiblen Druckübertragungsmedium gefüllt und mittels einer Druckübertragungsmembrane (3) zur Druckseite des Systems abgeschlossen ist, und daß in dem Druckraum (4) eine über den Druck desselben wirkende Sensor-Justiervorrichtung (13, 24) angeordnet ist.

2. Vorrichtung nach Anspruch 1, dadurch gekennzeichnet, daß ein den Druckraum (4) des Schraubgehäuses oder Sensorgehäuses begrenzendes und die Druckübertragungsmembrane (3) aufnehmendes Ringsystem (8,9) eine Radialbohrung aufweist, welche durch ein den Druck des Druckraumes (4) justierbares Element verschlossen ist.

3. Vorrichtung nach Anspruch 2, dadurch gekennzeichnet, daß das Element als Kugel (24) ausgebildet ist, welche zur Druckjustierung des Drucksensors (2) mit einem definierten Druck in die Radialbohrung einsetzbar ausgebildet ist.

4. Vorrichtung nach Anpruch 2, dadurch gekennzeichnet, daß das Schraubgehäuse (1) zur Aufnahme der Druck-Justiervorrichtung eine Winkelbohrung aufweist.

5. Vorrichtung nach Anpruch 2, dadurch gekennzeichnet, daß die Radialbohrung als Schraubbohrung und das justierbare Element als Schraubelement ausgebildet ist.

6. Vorrichtung nach Anspruch 1, dadurch gekennzeichnet, daß die Sensor-Justiervorrichtung als ein mechanischer, einen elektrischen Kreis schließbaren Druckschalter (13) ausgebildet ist, welcher einen definiert geringen Ansprechwert aufweist, und daß der durch den Druckschalter (13) schließbare elektrische Kreis im elektrischen Kreis des Sensors liegt.

7. Vorrichtung nach Anspruch 6, dadurch gekennzeichnet, daß der mechanische Druckschalter (24) justierbar ausgebildet ist.

8. Vorrichtung nach Anspruch 1, dadurch gekennzeichnet, daß die Sensor-Justiervorrichtung zur Null-Punkt-Einstellung des Drucksensors aus elektrischen Kombinationswiderständen besteht.

9. Vorrichtung nach Anspruch 1, dadurch gekennzeichnet, daß die Sensor-Justiervorrichtung als Foliendruckschalter ausgebildet ist.

10. Vorrichtung nach Anspruch 1, dadurch gekennzeichnet, daß die die elektrischen Kontakte aufnehmenden Bohrungen (7) konisch ausgebildet sind, wobei der Bohrungsdurchmesser zum drucklosen Raum hin abnimmt.

11. Vorrichtung nach Anspruch 2, dadurch gekennzeichnet, daß die Konizität etwa 1:50 beträgt

12. Vorrichtung nach Anspruch 1 oder einem der voranstehenden, dadurch gekennzeichnet, daß die Druckmeßzelle (2) unmittelbar oder mittelbar auf der Wandung des Schraubgehäuses angeordnet ist, welche den Druckraum vom drucklosen Raum trennt.

13. Vorrichtung nach Anspruch 1 oder einem der voranstehenden, dadurch gekennzeichnet, daß die elektronische Schaltung im drucklosen Raum des Schraubgehäuses zur Verstärkung schwacher Ausgangssignale des Drucksensors als Verstärker-Hybrid (14) ausgebildet ist.

14. Vorrichtung nach Anspruch 1 oder einem der voranstehenden, dadurch gekennzeichnet, daß das Schraubgehäuse (1) in einen zur Ankopplung an hyraulische oder pneumatische Systeme ausgelegten Adapter einschraubbar ausgebildet ist.

15. Vorrichtung nach Anspruch 1 oder einem der voranstehenden, dadurch gekennzeichnet, daß in dem Druckraum eine Temperaturmeßzelle (16) zur Temperaturmessung und Temperaturkompensation angeordnet ist.

FIG.1

FIG.2

FIG.3

16

24

1

2

15

7

5

FIG.4

12

18

10

24

16

2

8

4

11

3

FIG.5

16
13
15
24
8
9
3

FIG.6

16
13
15
3
24
8
11

FIG.7

16
13
15
3
8
9